# EUROPEAN PATENT SPECIFICATION

(11) **EP 1 837 160 B1**
(45) Date of publication and mention of the grant of the patent: **07.12.2011**
(21) Application number: 06006055.5
(22) Date of filing: 23.03.2006
(51) Int. Cl.: B29C 61/00, C08J 3/24

(54) **Ionic strength sensitive shape memory polymers and compositions**
Ionenstärkesensitive Formgedächtnispolymere und Formgedächtniszusammensetzungen
Polymères et compositions à mémoire de formes sensibles à une force ionique

(43) Date of publication of application: 26.09.2007
(73) Proprietor: Helmholtz-Zentrum Geesthacht Zentrum für Material- und Küstenforschung GmbH, 21502 Geesthacht (DE)
(72) Inventor: Lendlein, Andreas, 14167 Berlin (DE)
(74) Representative: Gulde, Klaus W.

(56) References cited:
- WO-A-03/084491
- WO-A-2004/073690
- WO-A-2005/046470
- WO-A-2005/060606
- DE-A1- 10 247 689
- US-A- 5 002 570
- US-A1- 2003 055 198
- US-A1- 2005 244 353

## Description

The present invention concerns shape memory polymers and compositions sensitive towards ionic strength, method of producing then and the use of these materials in medicinal applications.

### Prior art

Shape memory polymers are an interesting class of materials, which have received considerable attention in recent years. Shape memory functionality is the ability of a material to temporarily fix a second shape after an elastic deformation and only recover its original shape after application of an external stimulus. While this effect is one-way, reversible shape changes induced by cooling and heating, i.e. a two-way effect may also be realized.

The advantageous and intriguing properties of these materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape in the art. The phenomenon is a functionality and not an inherent material property. The effect/functionality results from a combination of polymer structure and specific functionalization processes.

The first materials known to provide this functionality were metallic shape memory alloys. In the recent past, shape memory polymers have been developed. Typical shape memory polymers are, for example, phase segregated linear block copolymers, having a hard segment and a switching (soft) segment. Important representatives of these types of materials are disclosed in the international publications WO 99/42147 and WO 99/42528. These materials employ as external stimulus for initiating the recovery of the original shape a change in temperature, usually a temperature rise. Shape memory polymers being susceptible to other external stimuli are also known, such as the photosensitive shape memory polymers disclosed in WO 2004/062706.

For certain applications, however, it is not suitable to employ a temperature rise or light as external stimulus for initiating the shape memory effect. The use of a temperature rise is in particular restricted in the medicinal field, since the living body cannot be subjected to intense heat treatment for a prolonged time. Furthermore the use of a temperature rise might be difficult in particular with shape memory polymers possessing transition temperatures (i.e. temperatures at which the shape memory effect is initiated) in the vicinity of the body temperature. With such materials it is often impossible to place a medical device within a living body without running the danger of triggering the shape memory effect earlier than desired. The photosensitive materials on the other hand require, in particular in connection with the use of medicinal devices within the living body, that a light source has to be introduced into the living body, since it is not possible to irradiate the living body from the outside to trigger the shape memory effect.

US 5002570 A and WO 2005/060606 A disclose hydrogels having acidic and/or basic groups which are capable of a change of shape by swelling. The capability of swelling varies as a function of the ionic strength or the pH value.

WO 2004/073690 A discloses shape memory polymers which may be triggered by a change in the pH value.

WO 2005/046470A, being the base of the preamble of claim 1, and US 2003/055198 A describe shape memory polymers which are sensitive towards a change in the ionic concentration and/or in the pH value. As functional groups suitable to be triggered by changes in the ionic strength or pH these documents disclose ionic crosslinks between two segments, such as amine or amide groups bridged by calcium ions.

It is desirable to develop alternative shape memory polymers and compositions which are sensitive to a change in ionic strength.

### Brief description of the invention

The present invention solves the above object with the shape memory polymer as defined in claim 1. Preferred embodiments are outlined in claims 2 to 7. Furthermore the present invention provides the method for preparing such shape memory polymers as outlined in claim 8 as well as the use as defined in claims 9 and 10.

As defined in claim 1, the shape memory polymers of the present invention are sensitive towards a change in ionic strength. The term ionic strength as employed here means the sum of the molality of each ion present in a solution multiplied by the square of its charge. One phenomenon designated in accordance with the present invention as one embodiment of ionic strength is the pH value, although from a scientific standpoint pH value and ionic strength are not embodiments of one type. In the context of the present invention however a change in pH value is described as one preferred embodiment of a change in ionic strength. As is already clear from the above general description, the materials in accordance with the present invention do show the shape memory properties when brought into contact with liquid systems comprising dissolved ions, wherein the shape memory effect can be triggered by a change in ionic strength, preferably a change in pH value. These changes do give rise to modifications within the material enabling the recovery of the original, i.e. permanent shape, starting from the temporary, i.e. deformed shape. The materials in accordance with the present invention comprise segments, phases or groups that are sensitive towards a change in ionic strength, preferably pH value. Once such a change in ionic strength takes place these segments, phases or groups are subjected to a change, namely the cleavage of bonds (covalent ion sensitive groups) enabling the material to show a change in shape in accordance with the principles of shape memory materials. In accordance with the present invention the shape memory materials disclosed herein can be described as materials (in terms of standard nomenclature for shape memory polymers) comprising hard segments/phases responsible for the permanent shape and switching (soft) segments/phases responsible for the temporary shape. These switching segments are sensitive towards a change in ionic strength, preferably a change in pH value, so that the shape memory effect can be triggered in contact with a liquid comprising dissolved ions. Typically the shape memory effect of this type is triggered once an article made from a shape memory material in accordance with the present invention in contact with the liquid mentioned above has absorbed a sufficient amount of the liquid so that the change in ionic strength leads to the initiation of the shape memory effect.

The materials in accordance with the present invention may be of any type, e.g. polymers (such as block copolymers) as well as polymer compositions, including blends and network materials (such as IPN, semi-IPN as well as covalently crosslinked networks). For use in contact with the liquid providing the trigger for the shape memory effect, preferably aqueous solutions, the materials in accordance with the present invention have to be insoluble in the liquid. This may be accomplished either by using an insoluble thermoplastic material, i.e. by appropriately selecting the building blocks for the materials, or by providing network materials. Such materials are then able to be used in contact with a liquid, without sacrificing the mechanical integrity of the material. Typically these materials do show a certain degree of swelling when placed in contact with the liquid. The degree of swelling preferably is in the range of from 0.1 to 10 vol.-%, more preferably in the range of from 1 to 5 vol.%. In this manner the material is rendered receptive to a change in ionic strength, preferably pH value, since the liquid can "enter" (e.g. diffuse) into the material so that the change in ionic strength, preferably change in pH value leads to the desired initiation of the shape memory effect. However, the present invention also envisages swelling degrees higher than mentioned above, such as up to 20 vol.-%, or more, such as up to 50 vol.-%, up to 75 vol.-%, and even up to 100 vol.-% or more, e.g. up to 150 vol.-%, up to 200 vol.-%, up to 350 vol.-%.

The shape memory materials in accordance with the present invention show a structure corresponding to the known conventional shape memory polymers/compositions, in particular the shape memory polymers in accordance with the present invention comprise hard segments responsible for the permanent shape, which comprise network points / crosslinks of any suitable nature for providing and fixing the permanent shape. In particular suitable are covalent network points / crosslinks, although also other network points are suitable. In this connection reference is made to the international applications WO 99/42147, WO 99/42528, and WO 2004/062706. concerning the chemical structure of the hard segments and the network points / crosslinks fixing the permanent shape. In this respect reference is made in particular to Figure 1 of WO 2004/062706 and the corresponding discussion in the specification of this document, showing an illustration of a shape memory material comprising covalent network points for fixing the permanent shape.

Preferably the hard segments or the network points / crosslinks for fixing the permanent shape are selected among materials / structures that show at least a fair resistance towards a change in ionic strength, such as a change in pH value, so that the triggering stimulus in accordance with the present invention does not affect the hard segments / the permanent shape. Suitable materials may be selected among structures known to show a good resistance in this respect, in particular hydrolysis resistant materials.

The segment structure and length for the hard segments may be selected as appropriate and in this connection reference is again made to the three international applications mentioned above, i.e. WO 99/42147, WO 99/42528, and WO 2004/062706.

Switching segments in accordance with the present invention are switching segments that are sensitive towards a change in ionic strength, preferably a change in pH value. Sensitive in accordance with the present invention means that these segments show some type of modification of chemical nature which enables that the temporary shape, fixed by the switching segments, no longer can be maintained so that the recovery of the permanent shape occurs.

In this connection the present invention contemplates, without being bound to this explanation, that the interactions between the segments being sensitive towards a change in ionic strength in accordance with the present invention are present in the form of either groups of different charge (anionic groups in the polymer chain and cations serving as bridging groups) or by means of hydrogen bridges or other covalent bonds, such as exemplified above and explained below.

Suitable switching segments are in particular segments comprising functional groups undergoing a ring opening of a cyclic structure, such as an ester, amide or anhydride structure at a given ionic strength or pH value. Such cyclic structures, susceptible for example to an acidic cleavage leading to ring opening may be used as switching segments. In the closed, ring form these groups secure the temporary shape, which is formed by elastic deformation of the permanent shape followed by formation of the cyclic structures, linking for example segments of different polymer chains together, thereby fixing the temporary shape. Once the temporary shape is fixed the material is able to recover the permanent shape after being subjected to contact with a liquid providing the desired change in pH value, so that the cyclic structures are cleaved. Such groups act in a similar way to the groups showing a light sensitive cycloaddition for securing the temporary shape as disclosed in the above mentioned WO 2004/062706. A further possibility to provide sensitive switching segments in accordance with the present invention are segments susceptible towards a hydrolytic degradation, for example in contact with liquids of high ionic strength. Suitable segments are for example ester, amide and anhydride segments, i.e. segments comprising such groups within the main chain. Degradation processes destroy such segments so that a temporary shape fixed for example by physical crosslinks between such segments can no longer be hold once the degradation has exceeded a threshold value. These materials then return to the permanent shape, with the drawback however that the materials most often cannot be reused since the polymer structure has been destroyed (at least partially).

Previously mainly temperature and light sensitive shape memory polymers have been reported. The novel materials in accordance with the present invention enable the use of other stimuli, such as ionic strength, pH value, type of ion (monovalent/multivalent cations, see above) etc. Such external stimuli further open new types of application, since the shape memory polymers in accordance with the present invention may be used in moist/liquid environments, since initiation of the shape memory effect requires the possibility to carry out ion exchange etc. which mainly may be realized in liquid systems. Accordingly the materials have to enable at least a certain degree of swelling, for example, in order to allow such reactions.

The materials as provided by the present invention may be, as already indicated above, thermoplastic or thermoset materials, including interpenetrating networks of all kind. In embodiments the materials in accordance with the present invention are at least partially crosslinked (permanently). In embodiments the present invention also includes materials which comprise covalent ion sensitive network points. A further embodiment of a material in accordance with the present invention comprises a combination of polyelectrolyte segments with covalent ion sensitive groups. Any of the embodiments mentioned above may be given alone or in any combination (such as a partially crosslinked material with covalent ion sensitive network points).

The shape memory polymers of the present invention may be prepared using standard polymer reaction, such as disclosed in the above discussed international patent applications, i.e. WO 99/42147, WO 99/42528, and WO 2004/062706. In particular suitable is a method involving the provision of suitably functionalised macromonomers, corresponding to the segments of the shape memory polymers providing, for examples in diol form, followed by a reaction connecting the macromonomers, for example a reaction with a diisocyanate. Suitable reaction conditions are disclosed in WO 99/42147, WO 99/42528, and WO 2004/062706.

In accordance with the present invention it is possible as explained above to provide shape memory polymers sensitive towards a change in ionic strength, preferably a change in pH value, so that the shape memory effect may be triggered using solutions with a suitable content of dissolved ions.

The shape memory polymers of the present invention may be thermoplastic or thermoset materials, depending in particular from the desired end use. Molecular weight of the shape memory polymers and the individual segments, as well as molecular weight distribution and chemical composition may be adjusted in accordance with the knowledge of the skilled person, again in particular depending from the desired end use. The shape memory polymers of the present invention may be further blended with additional components, such as polymers, fillers, additives as well as pharmaceutical and diagnostic agents. In particular for the application in the medicinal field the shape memory polymers of the present invention may be compounded with active principles, such as anti-inflammatory agents, growth factors etc., as well as diagnostic agents, in particular contrast agents.

The shape memory materials of the present invention are in particular intended for use in the medical field, as well as in the field of sensors to be used in liquids. Due to the sensitivity towards change in ionic strength and pH value the materials in accordance with the present invention may be used as sensors for controlling effluents, so that for example an undesired change in pH value can be detected. Due to the possibility to show a change in shape such sensors may be for example used to close lines supplying liquids once an undesired change in ionic strength or pH value occurs. The shape memory materials in this respect may be designed so that they show for example a vast increase in volume, closing openings and preventing a further supply of liquids. Such sensors may accordingly be also used for detecting and closing leaks, preventing for example the undesired spillage of liquids. Further applications which are envisaged by the present invention are the use of the materials in accordance with the present invention for water treatment (removal of salts, heavy metal ions etc.) as well as in the nutritional industry. Other examples of possible areas of application are devices which do show a shape memory effect only when brought into contact in seawater, whereas the contact with freshwater does not initiate the shape memory effect since the ionic strength of freshwater is not sufficient for initiating the shape memory effect. Such a device may for example be a safety device on ships which does not show the shape memory effect when brought into contact with rain or with freshwater used for cleaning purposes.

## Claims

1. Shape memory polymer, comprising hard segments or network points for fixing a permanent shape and switching segments for fixing a temporary shape, wherein the switching segments are sensitive towards a change in ionic strength, **characterised In that** the switching segments are selected from segments comprising cyclic groups being susceptible to a ring opening by a change in ionic strength or from segments which are susceptible towards hydrolytic degradation.

2. Shape memory polymer in accordance with claim 1, wherein the shape memory polymer is a thermoplastic or a thermoset material.

3. Shape memory polymer in accordance with claim 1, wherein the shape memory polymer shows a degree of swelling from 0.1 to 10 vol.-% when brought into contact with water.

4. Shape memory polymer in accordance with any of claims 1 to 3, wherein the switching segments for fixing the temporary shape are sensitive towards a change in pH value.

5. Shape memory polymer in accordance with any of claims 1 to 4, wherein the cyclic groups being susceptible to a ring opening are selected from esters, amides or anhydride groups.

6. Shape memory polymer in accordance with any of claims 1 to 4, wherein the segments which are susceptible towards hydrolytic degradation comprise groups susceptible towards hydrolytic degradation in their main chain.

7. Shape memory polymer in accordance with claim 6, wherein the groups susceptible towards hydrolytic degradation are selected from ester, amide or anhydride groups.

8. Method of preparing a shape memory polymer in accordance with any of claims 1 to 7, comprising the reaction of suitably functionalized macromonomers corresponding to the segments of the shape memory polymer with a suitable reactand for providing a chemical linkage between the segments.

9. Use of a shape memory polymer according to any of claims 1 to 7 for the preparation of a medical device, for the treatment of water, or the manufacture of a sensor.

10. Use according to claim 9, wherein the sensor is a pH sensitive sensor.

## Patentansprüche

1. Formgedächtnispolymer, umfassend Hartsegmente oder Netzwerkpunkte zur Fixierung einer permanenten Form und Schaltsegmente zur Fixierung einer temporären Form, wobei die Schaltsegmente empfindlich gegenüber einer Änderung der Ionenstärke sind, **dadurch gekennzeichnet, dass** die Schaltsegmente ausgewählt sind aus Segmenten, die cyclische Gruppen umfassen, die für eine Ringöffnung durch Änderung der Ionenstärke anfällig sind, oder aus Segmenten, die gegen hydrolytischen Abbau anfällig sind.

2. Formgedächtnispolymer nach Anspruch 1, bei dem es sich um ein thermoplastisches oder um ein duroplastisches Material handelt.

3. Formgedächtnispolymer nach Anspruch 1, bei dem das Formgedächtnispolymer bei Kontakt mit Wasser einen Quellgrad von 0,1 bis 10 Vol.-% zeigt.

4. Formgedächtnispolymer nach einem der Ansprüche 1 bis 3, bei dem die Schaltsegmente zur Fixierung der temporären Form empfindlich gegenüber einer Änderung des pH-Werts sind.

5. Formgedächtnispolymer nach einem der Ansprüche 1 bis 4, bei dem die für eine Ringöffnung anfälligen cyclischen Gruppen ausgewählt sind aus Estern, Amiden oder Anhydridgruppen.

6. Formgedächtnispolymer nach einem der Ansprüche 1 bis 4, bei dem die gegen hydrolytischen Abbau anfälligen Segmente gegen hydrolytischen Abbau anfällige Gruppen in ihrer Hauptkette umfassen.

7. Formgedächtnispolymer nach Anspruch 6, bei dem die gegen hydrolytischen Abbau anfälligen Gruppen ausgewählt sind aus Ester-, Amid- oder Anhydridgruppen.

8. Verfahren zur Herstellung eines Formgedächtnispolymers gemäß einem der Ansprüche 1 bis 7, unfassend der Umsetzung geeignet funktionalisierter Makromonomere, die den Segmenten des Formgedächtnispolymers entsprechen, mit einem zur Herstellung einer chemischen Verknüpfung zwischen den Segmenten geeigneten Reaktanden.

9. Verwendung eines Formgedächtnispolymers gemäß einem der Ansprüche 1 bis 7 zur Herstellung eines medizintechnischen Produkts, zur Aufbereitung von Wasser oder zur Herstellung eines Sensors.

10. Verwendung nach Anspruch 9, bei der es sich bei dem Sensor um einen pH-empfindlichen Sensor handelt.

## Revendications

1. Polymère à mémoire de forme, comprenant des segments durs ou des noeuds de réticulation pour prendre une forme permanente, et des segments flexibles pour prendre une forme temporaire, dans lequel les segments flexibles sont sensibles à un changement de force ionique, **caractérisé en ce que** les segments flexibles sont choisis parmi les segments comprenant des groupes cycliques étant susceptibles d'une ouverture de cycle par un changement de force ionique ou parmi les segments qui sont sensibles à une dégradation hydrolytique.

2. Polymère à mémoire de forme selon la revendication 1, le polymère à mémoire de forme étant un matériau thermoplastique ou thermodurcissable.

3. Polymère à mémoire de forme selon la revendication 1, le polymère à mémoire de forme présentant un degré de gonflement de 0,1 à 10 % en volume lorsqu'il est mis en contact avec de l'eau.

4. Polymère à mémoire de forme selon l'une quelconque des revendications 1 à 3, dans lequel les segments flexibles pour prendre la forme temporaire sont sensibles à un changement de valeur de pH.

5. Polymère à mémoire de forme selon l'une quelconque des revendications 1 à 4, dans lequel les groupes cycliques étant susceptibles d'une ouverture de cycle sont choisis parmi les groupes ester, amide ou anhydride.

6. Polymère à mémoire de forme selon l'une quelconque des revendications 1 à 4, dans lequel les segments qui sont sensibles à une dégradation hydrolytique comprennent des groupes sensibles à une dégradation hydrolytique dans leur chaîne principale.

7. Polymère à mémoire de forme selon la revendication 6, dans lequel les groupes sensibles à une dégradation hydrolytique sont choisis parmi les groupes ester, amide ou anhydride.

8. Procédé de préparation d'un polymère à mémoire de forme selon l'une quelconque des revendications 1 à 7, comprenant la réaction de macromonomères adéquatement fonctionnalisés correspondant aux segments du polymère à mémoire de forme avec un réactif approprié pour créer une liaison chimique entre les segments.

9. Utilisation d'un polymère à mémoire de forme selon l'une quelconque des revendications 1 à 7 pour la préparation d'un dispositif médical, pour le traitement de l'eau, ou pour la fabrication d'un capteur.

10. Utilisation selon la revendication 9, dans laquelle le capteur est un capteur sensible au pH.
